# EUROPÄISCHE PATENTSCHRIFT

(11) **EP 2 425 144 B1**
(45) Veröffentlichungstag und Bekanntmachung des Hinweises auf die Patenterteilung: **20.02.2013**
(21) Anmeldenummer: 10705882.8
(22) Anmeldetag: 01.03.2010
(51) Int. Cl.: F16D 65/12

(54) **BREMSSCHEIBE**
BRAKE DISC
DISQUE DE FREIN

(30) Priorität: 28.04.2009 DE 102009002690
(43) Veröffentlichungstag der Anmeldung: 07.03.2012
(73) Patentinhaber: Robert Bosch GmbH, 70442 Stuttgart (DE)
(72) Erfinder: SCHWARZ, Guenther, 78532 Tuttlingen (DE); MUELLER, Hans-Walter, 80939 München (DE)
(86) Internationale Anmeldenummer: PCT/EP2010/052541
(87) Internationale Veröffentlichungsnummer: WO 2010/124890

(56) Entgegenhaltungen:
- EP-A1- 1 900 962
- BE-A- 515 936
- DE-A1- 2 462 024
- DE-A1- 4 332 951

## Beschreibung

### Stand der Technik

Die Erfindung betrifft eine Bremsscheibe, insbesondere belüftete Bremsscheibe, mit einem Reibring und einem über Verbindungsglieder mit einem Reibring verbundenem Tragteil, insbesondere Scheibentopf. Die Bremsscheibe ist schwimmend gelagert ausgebildet, wie z.B. aus DE-A-2 462 024 bekannt.

Aus der DE 43 32 951 A1 ist eine belüftete Bremsscheibe bekannt, die einen Reibring und einen mit Verbindungsgliedern mit dem Reibring verbundenen Tragteil aufweist. Die Verbindungsglieder sind insbesondere als Stifte, Bolzen oder dergleichen ausgebildet und über den Umfang des Tragteils verteilt angeordnet. Die Verbindungsglieder ragen in Aussparungen in die Umfangswand des Reibrings. Der Reibring ist somit "schwimmend" auf dem Scheibentopf gelagert. Zwar können sich hier bei einer durch den Bremsvorgang hervorgerufenen Temperaturerhöhung ohne Gefahr von Verspannungen die Verbindungsglieder in radialer Richtung dehnen. Aber bei größeren Drehmomenten besteht die Gefahr, dass aufgrund der freien Länge der Verbindungsglieder, das heißt aufgrund des Abstandes zwischen Tragteil und Reibring sich die Verbindungsglieder verbiegen können und sich im Extremfall aus ihrem Sitz lösen können.

Aus der nachveröffentlichten DE 10 2007 054 393 A1 ist eine Bremsscheibe bekannt, bei der ebenfalls der Reibring und der Scheibentopf aus verschiedenen Materialien hergestellt sind und mit Verbindungsgliedern, insbesondere Stifte, verbunden sind. Bei dieser Bremsscheibe ist an den beiden Reibflächen ein Fortsatz angebracht, der eine durchgehende Bohrung oder eine Sacklochbohrung aufweist, in die die Verbindungsglieder ragen. Diese Fortsätze sind mit den beiden Reibflächen verbunden. Dadurch ergibt sich zwangsläufig ein großer Massenunterschied zwischen den Reibflächen und dem des Fortsatzes. Dies führt im Betrieb, dass heißt beim Bremsen, zu einem hohen Temperaturgradienten zwischen dem Fortsatz und den Reibflächen. Dadurch werden hohe Spannungsgradienten hervorgerufen, die im Extremfall zu Rissbildung in den Reibflächen führen können. Ferner wird durch die Größe der Fortsätze ein Lufteintritt in die sich zwischen den Reibflächen befindlichen Kühlkanäle der Bremsscheibe behindert.

Auch in der nachveröffentlichten DE 10 2008 042 173 A1 ist eine Bremsscheibe beschrieben, bei der der Reibring und der Scheibentopf aus verschiedenen Materialien bestehen. Hier sind die Verbindungsglieder in Fortsätzen geführt, die an den Querträgern der beiden Bremsscheiben befestigt sind. Durch diese Befestigungsart sind die Fortsätze gut von kühlender Luft umströmt, aber es können in Extremfällen Festigkeitsprobleme auftreten. Ferner können bei bestimmten Baumassen gießtechnische Probleme entstehen.

### Vorteile der Erfindung

Die erfindungsgemäße Bremsscheibe mit den kennzeichnenden Merkmalen des Anspruchs 1 hat demgegenüber den Vorteil, dass die gegebenen Einbauverhältnisse der Bremsscheibe nicht verändert werden müssen, aber der Fortsatz zwischen den breiten Bremsscheiben gekühlt wird. Die Einbringung von Ausnehmungen in die Fortsätze ermöglicht eine relativ einfache Ableitung der Wärme, die bei Betrieb, dass heißt beim Bremsen entsteht. Dadurch können im Bereich der Fortsätze eventuell auftretende Verspannungen verhindert werden. Die Rissneigung in den Bremsscheiben wird dadurch verringert. Auch wird die Ausbildung von Rissen in den Fortsätzen verhindert. Das geringe Aufheizen des Fortsatzes führt auch dazu, dass sich nur geringe Unterschiede in der Wärmeausdehnung für die Verbindungsglieder, die normalerweise aus Stahl bestehen, und dem Fortsatz, der gewöhnlich aus Gusseisen besteht, ergeben. Dies bedingt, dass die Beweglichkeit der Stifte in der Bohrung des Fortsatzes in allen Temperaturbereichen während des Betriebs gewährleistet ist. Andererseits wird aber die Festigkeit der gesamten Bremsscheibe gewährleistet, so dass auch ein Einsatz bei Extrembedingungen und bei robusten Beanspruchungen möglich ist. Sind die Ausnehmungen am Innenumfang umlaufend und jeweils zwischen den Verbindungsgliedern und einer der Bremsscheiben ausgebildet, so ist eine gleichmäßige Wärmeabführung und ein gleichmäßiger Spannungsabbau möglich. Die Ausnehmungen werden mechanisch während des nach dem Gießvorgang stattfindenden Bearbeitungsvorgangs z. B. durch Fräsen eingebracht.

### Zeichnung

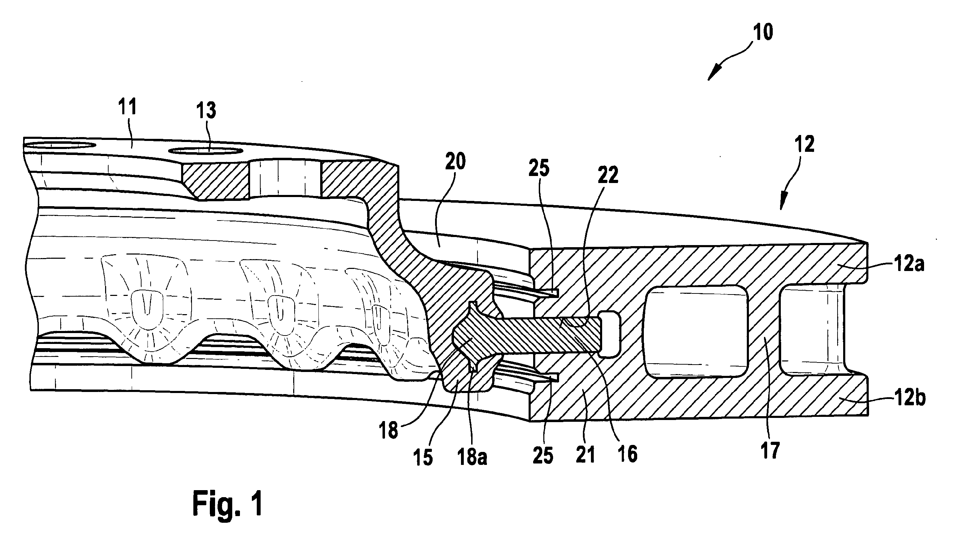

In der Figur 1 ist ein Teilschnitt durch eine Bremsscheibe dargestellt.

### Beschreibung des Ausführungsbeispiels

In der Figur 1 ist mit 10 eine Bremsscheibe bezeichnet, die aus einem Scheibentopf 11 und einem Reibring 12 besteht. In bekannter Weise ist der Scheibentopf 11 in hier nicht dargestellter Weise auf eine Nabe eines Fahrzeugs befestigt, wobei die Schrauben zur Befestigung durch die Bohrungen 13 des Scheibentopfs 11 ragen. Über eine Vielzahl von in der Umfangswand 15 des Scheibentopfs 11 eingeformten Verbindungsgliedern 16 in Form von Stiften oder Bolzen oder dergleichen ist der Scheibentopf 11 mit dem Reibring 12 verbunden. Der Stift 16 weist einen Kopf 18 mit umlaufenden Fortsatz 18a auf, mit dem er fest in der Umfangswand 15 des Scheibentopfs 11 fixiert ist. Der Reibring 12 besteht aus zwei Bremsscheiben 12a und 12b, welche durch eine Vielzahl von über dem Umfang verteilten und insbesondere in radialer Richtung verlaufender Stege 17 miteinander verbunden sind, so dass eine belüftete Bremsscheibe entsteht. Im Bereich des Innenumfangs des Reibrings 12 ist ein Trägersteg 21 ausgebildet. Dieser Trägersteg 21 läuft zwischen den beiden Bremsscheiben 12a und 12b über den gesamten Umfang um. Gegebenenfalls kann der Trägersteg auch abschnittsweise ausgebildet sein, so dass jeder Abschnitt des Trägerstegs einen Stift 16 gegenüberliegt. Im Trägersteg 21 sind durchgehende Bohrungen 22 zur Aufnahme der Stifte 16 ausgebildet. Es wären aber auch Sacklockbohrungen denkbar. Diese Bohrungen 22 sind in der Figur in der Mittellängsachse des Reibrings 12, also zentrisch zwischen den beiden Bremsscheiben 12a und 12b ausgebildet. Es wäre aber auch ein Versatz dieser Bohrungen 22 möglich. Im Trägersteg 21 sind über den gesamten Innendurchmesser 20 umlaufende, zum Scheibentopf 11 hin geöffnete Ausnehmung(en) 25 ausgebildet. Die Ausnehmung 25 ist etwa mittig zwischen der Bremsscheibe 12a und der Wand der Bohrung 22 bzw. zwischen der Wand der Bohrung 22 und der Bremsscheibe 12b ausgebildet. Der Ort der Ausnehmung(en) 25 im Trägersteg 21 kann aber abhängig von der gewünschten Wärmeabfuhr von den Bremsscheiben 12a bzw. 12b unterschiedlich ausgebildet sein. Für eine optimale Wärmeableitung wäre es wünschenswert die Ausnehmung 25 direkt am Fuß der jeweiligen Bremsscheibe 12a bzw. 12b auszubilden. Es wäre möglich mehrere Ausnehmungen 25 zwischen einer Bremsscheibe 12a bzw. 12b und dem Verbindungsglied 16 auszubilden. Die Ausnehmungen 25 sollten parallel zueinander verlaufen. Sie können auch unterschiedlich tief in den Trägersteg 21 eingebracht sein. Die Ausbildung sollte aber symmetrisch zu den Verbindungsgliedern 16 erfolgen.

Der Reibring 12 besteht aus Gusseisen, während der Scheibentopf 11 aus Leichtmetall, insbesondere Aluminium oder Magnesium besteht. Der Stift 16 ist aus Edelstahl, insbesondere nicht rostendem Edelstahl hergestellt. Bei der Herstellung wird zuerst der aus Gusseisen bestehende Reibring 12 hergestellt und die Stifte 16 in die Bohrungen 22 eingesetzt. Anschließend wird der Scheibentopf 11 aufgegossen. Hierbei werden auch die Köpfe 18 der Stifte 16 mit in die Umfangswand 15 des Scheibentopfs 11 eingegossen.

Der Reibring 12 ist auf dem Scheibentopf 11 schwimmend gelagert. Dazu müssen die Stifte 16 in den Bohrungen 22 mit relativ geringem Spiel angeordnet sein, so dass sich der Reibring 12 auf den Stiften 16 geringfügig bewegen kann. Dies ist notwendig, da sich beim Bremsvorgangs der Reibring 12 erwärmt und geringfügig vom Scheibentopf 11 weg in radialer Richtung ausdehnt. Durch die Ausnehmungen 25 ist aber dieser Erwärmvorgang gering, da die Ausnehmungen 25 einen Kühleffekt und einen Spannungsminderungseffekt erzeugen.

## Patentansprüche

1. Bremsschreibe (10) insbesondere belüftete Bremsscheibe, mit einem aus wenigstens zwei von Stegen (17) getrennten Scheiben (12a, 12b) bestehenden Reibrings (12) und mit einem Tragteil (11), wobei am Umfang des Tragteils (11) mehrere mit dem Tragteil (11) verbundene Verbindungsteile (16) vorhanden sind, die in einen zwischen den Scheiben (12a, 12b) des Reibrings (12) ausgebildeten mindestens teilweise umlaufenden Trägersteg (21) ragen, **dadurch gekennzeichnet, dass** im Trägersteg (21) zwischen den Verbindungsteilen (16) und mindestens einer Scheibe (12a, 12b) des Reibrings (12) eine mindestens teilweise ringförmig umlaufende Ausnehmung (25) ausgebildet ist und die Ausnehmungen mechanisch während eines nach dem Gießvorgang stattfindenden Bearbeitungsvorgangs eingebracht werden.

2. Bremsscheibe nach Anspruch 1, dass die Ausnehmung (25) zum Trägerteil (11) hin geöffnet ist.

3. Bremsscheibe nach Anspruch 1 oder 2, **dadurch gekennzeichnet, dass** zwischen der einen Scheibe (12a) und dem Verbindungsglied (16) eine Ausnehmung (25) ausgebildet ist und eine Ausnehmung (25) zwischen dem Verbindungsglied (16) und der anderen Scheibe (12b) des Reibrings (12) sich befindet.

4. Bremsscheibe nach einem der Ansprüche 1 bis 3, **dadurch gekennzeichnet, dass** sich die Ausnehmung(en) (25) im Bereich des Fußes der Scheibe (12a, 12b) des Reibrings (12) befindet.

5. Bremsscheibe nach einem der Ansprüche 1 bis 4, **dadurch gekennzeichnet, dass** die Ausnehmung(en) (25) parallel zum Verbindungsteil (16) verlaufen.

6. Bremsscheibe nach einem der Ansprüche 1 bis 5, **dadurch gekennzeichnet, dass** die Ausnehmungen (25) parallel zueinander verlaufen.

7. Bremsscheibe nach einem der Ansprüche 1 bis 6, **dadurch gekennzeichnet, dass** sich mehrere Ausnehmungen (25) zwischen der Scheibe (12a, 12b) und dem Verbindungsglied (16) befinden.

8. Bremsscheibe nach einem der Ansprüche 1 bis 7, **dadurch gekennzeichnet, dass** das Trägerteil (11) aus Leichtmetall, insbesondere Aluminium, der Reibring (12) aus Gusseisen und das Verbindungsteil (16) aus Edelstahl besteht.

9. Bremsscheibe nach einem der Ansprüche 1 bis 8, **dadurch gekennzeichnet, dass** das Verbindungsglied (16) ein Stift, Bolzen oder dergleichen ist.

## Claims

1. Brake disc (10), in particular ventilated brake disc, with a friction ring (12) consisting of at least two discs (12a, 12b) separated by webs (17) and with a carrying part (11), there being present on the circumference of the carrying part (11) a plurality of connecting parts (16) which are connected to the carrying part (11) and project into an at least partially continuous carrier web (21) formed between the discs (12a, 12b) of the friction ring (12), **characterized in that** an at least partially annularly continuous recess (25) is formed in the carrier web (21) between the connecting parts (16) and at least one disc (12a, 12b) of the friction ring (12), and the recesses are introduced mechanically during a machining operation taking place after the casting operation.

2. Brake disc according to Claim 1, **characterized in that** the recess (25) is open towards the carrier part (11).

3. Brake disc according to Claim 1 or 2, **characterized in that** a recess (25) is formed between one disc (12a) and the connecting member (16) and a recess (25) is located between the connecting member (16) and the other disc (12b) of the friction ring (12).

4. Brake disc according to one of Claims 1 to 3, **characterized in that** the recess or recesses (25) is or are located in the region of the foot of the disc (12a, 12b) of the friction ring (12).

5. Brake disc according to one of Claims 1 to 4, **characterized in that** the recess or recesses (25) runs or run parallel to the connecting part (16).

6. Brake disc according to one of Claims 1 to 5, **characterized in that** the recesses (25) run parallel to one another.

7. Brake disc according to one of Claims 1 to 6, **characterized in that** a plurality of recesses (25) are located between the disc (12a, 12b) and the connecting member (16).

8. Brake disc according to one of Claims 1 to 7, **characterized in that** the carrier part (12) consists of light metal, in particular aluminium, the friction ring (12) consists of cast iron and the connecting part (16) consists of high-grade steel.

9. Brake disc according to one of Claims 1 to 8, **characterized in that** the connecting member (16) is a pin, bolt or the like.

## Revendications

1. Disque de frein (10), en particulier disque de frein ventilé, avec une bague de friction (12) composée d'au moins deux disques (12a, 12b) séparés par des nervures (17) et avec une partie de support (11), dans lequel il se trouve à la périphérie de la partie de support (11) plusieurs parties de liaison (16) reliées à la partie de support (11), qui pénètrent dans une nervure de support (21) au moins partiellement périphérique formée entre les disques (12a, 12b) de la bague de friction (12), **caractérisé en ce qu'**un évidement périphérique au moins partiellement annulaire (25) est formé dans la nervure de support (21) entre les parties de liaison (16) et au moins un disque (12a, 12b) de la bague de friction (12) et les évidements sont pratiqués mécaniquement pendant une opération d'usinage exécutée après l'opération de coulée.

2. Disque de frein selon la revendication 1, **caractérisé en ce que** l'évidement (25) est ouvert en direction de la partie de support (11).

3. Disque de frein selon la revendication 1 ou 2, **caractérisé en ce qu'**un évidement (25) est formé entre un premier disque (12a) et l'élément de liaison (16) et un évidement (25) se trouve entre l'élément de liaison (16) et l'autre disque (12b) de la bague de friction (12).

4. Disque de frein selon l'une quelconque des revendications 1 à 3, **caractérisé en ce que** l'évidement/les évidements (25) se trouve(nt) dans la région du pied du disque (12a, 12b) de la bague de friction (12).

5. Disque de frein selon l'une quelconque des revendications 1 à 4, **caractérisé en ce que** l'évidement/les évidements (25) s'étend(ent) parallèlement à la partie de liaison (16).

6. Disque de frein selon l'une quelconque des revendications 1 à 5, **caractérisé en ce que** les évidements (25) s'étendent parallèlement l'un à l'autre.

7. Disque de frein selon l'une quelconque des revendications 1 à 6, **caractérisé en ce que** plusieurs évidements (25) se trouvent entre le disque (12a, 12b) et l'élément de liaison (16).

8. Disque de frein selon l'une quelconque des revendications 1 à 7, **caractérisé en ce que** la partie de support (11) se compose de métal léger, en particulier d'aluminium, la bague de friction (12) se compose de fonte et la partie de liaison (16) se compose d'acier allié.

9. Disque de frein selon l'une quelconque des revendications 1 à 8, **caractérisé en ce que** l'élément de liaison (16) est une broche, un boulon ou analogue.
